**Europäisches Patentamt**

**European Patent Office**

**Office européen des brevets**

(19)

(11) Veröffentlichungsnummer: **0 015 561**
**A1**

(12) # EUROPÄISCHE PATENTANMELDUNG

(21) Anmeldenummer: **80101152.9**

(22) Anmeldetag: **07.03.80**

(51) Int. Cl.³: **C 08 J 5/12**, B 32 B 15/08,
C 09 J 3/14
// (C09J3/14, C08L23/08)

(30) Priorität: **12.03.79 DE 2909604**

(43) Veröffentlichungstag der Anmeldung: **17.09.80**
**Patentblatt 80/19**

(84) Benannte Vertragsstaaten: **AT BE CH DE FR GB IT LU NL SE**

(71) Anmelder: **BASF Aktiengesellschaft,
Carl-Bosch-Strasse 38, D-6700 Ludwigshafen (DE)**

(72) Erfinder: **Bauer, Peter, Erich-Kaestner-Strasse 13,
D-6700 Ludwigshafen (DE)**
Erfinder: **Glaser, Rudolf, Dr., Don-Carlos-Strasse 9,
D-6700 Ludwigshafen (DE)**
Erfinder: **Haeseler, Richard, Kranichstrasse 8,
D-6700 Ludwigshafen (DE)**

(54) **Verfahren zur Herstellung von Schichtstoffen aus Eisen oder Stahl und einem Polyolefin.**

(57) Verfahren zur Herstellung von Schichtstoffen aus Eisen oder Stahl und einem Polyolefin, wobei man eine Haftvermittlerschicht aus einem Äthylenterpolymerisat, bestehend aus 62-95 Gew.-% Äthylen, 2-30 Gew.-% eines Esters einer äthylenisch ungesättigten Carbonsäure und 3-8 Gew.-% einer äthylenisch ungesättigten Carbonsäure, z.B. einem Äthylen-Acrylsäureester-Acrylsäure-Terpolymerisat verwendet, das einen Glycerin- oder Pentaerythrit-ester des vollständig hydrierten Kolophoniums enthält und die Schichten bei erhöhtem Druck unter Schmelzen des Haftvermittlers verklebt. Man erhält eine haftfeste Verklebung von Eisen oder Stahl mit Polyolefin, wobei eine Klebverbindung mit guter Festigkeit bei erhöhten Temperaturen und geringen Unterwanderungstiefen durch Wasser im Falle einer Verletzung der Polyolefinbeschichtung auch bei kathodisch geschützten Systemen erhalten wird.

Verfahren zur Herstellung von Schichtstoffen aus Eisen oder
Stahl und einem Polyolefin

---

Die Erfindung betrifft ein Verfahren zur Herstellung von
Schichtstoffen aus Eisen oder Stahl und einem Polyolefin,
wobei man die Metallschicht ein- oder beidseitig mit einer 1 bis 10 mm dicken Polyolefinschicht unter Verwendung
jeweils einer dazwischen liegenden, 50 bis 500 $\mu$m dicken
Schicht eines Haftvermittlers, der aus einer Mischung aus
(a) einem Äthylenterpolymerisat, das 62 bis 95 Gew.-% Äthylen, 2 bis 30 Gew.-% eines Esters einer ungesättigten Carbonsäure und 3 bis 8 Gew.-% einer äthylenisch ungesättigten Carbonsäure - wobei die Summe der Gewichtsteile jeweils
100 betragen muß - einpolymerisiert enthält und (b) einem
modifiziertem Kolophonium besteht, bei erhöhter Temperatur
sowie ggf. bei erhöhtem Druck unter Schmelzen des Haftvermittlers verklebt.

Bei derartigen Verfahren werden Schichtstoffe aus Metallen
wie Eisen oder Stahl und Thermoplasten aus der Gruppe der
Polyolefine erhalten, wobei die einzelnen Schichten fest zu
Verbundschichtstoffen verklebt sind. Das Verfahren hat vor
allem den Zweck, Bleche, Folien oder Rohre aus Eisen oder
Stahl sowie verzinkte Eisenrohre mit Polyolefinen, insbesondere mit Polyäthylen, ein- oder beidseitig zu beschichten.

Aus der DE-OS 1 669 685 ist ein Verfahren zum Verkleben
oder Beschichten von Werkstoffen mit einem Terpolymerisat
aus Äthylen, einer äthylenisch ungesättigten Carbonsäure
und einem Ester einer äthylenisch ungesättigten Carbonsäure bekannt. Mit diesen Terpolymerisaten ist es möglich,
Aluminiumbleche oder Eisen- und Stahlrohre fest mit Polyäthylen zu verbinden. Die Haftfestigkeit der genannten Po-

Fre/Fe

lymerisate fällt jedoch bei Lagerung der Verbundstoffe in Wasser schon nach kurzer Zeit stark ab, so daß die Schichten der Verbundstoffe leicht voneinander gelöst werden können.

Nach einem anderen Verfahren der DE-OS 1 917 277 werden als Klebemittel zum Verkleben von Metallen oder von Kunststoffen mit Metallen Terpolymerisate aus Äthylen, äthylenisch ungesättigten Carbonsäuren und eines Esters einer äthylenisch ungesättigten verwendet, wobei diese Terpolymerisate zur Verbesserung der Versprödungstemperatur unterhalb von $0^\circ$C zusätzlich noch bis zu 7,0 Gew.-% eines organischen Peroxids enthalten müssen. Die bekannten Klebemittel können als weitere Komponente härtbare und/oder nicht härtbare Harze wie hydriertes oder verestertes Kolophonium, Terpen-, Kohlenwasserstoff-, Keton- und Phenolharze enthalten. Bei Verwendung der bekannten Mischungen erhält man Klebemassen, bei denen die Unterwanderung bei kathodischem Schutz nicht ausreichend ist.

Bei dem aus der DE-OS 2 245 559 bekannten Verfahren werden den carboxyl- und estergruppenhaltigen Äthylenterpolymerisaten zur Beseitigung des Nachteils der geringen Wasserfestigkeit bis zu 5 Gew.-% einer Hydroxylgruppe aufweisende organische Azo- bzw. Azomethinverbindung zugesetzt. Man erreicht dadurch eine Verbesserung der Haftfestigkeit der Schichten in den Verbundstoffen nach Lagerung in Wasser. Der Effekt wird jedoch nur bei frisch hergestellten Mischungen erzielt. Nach längerer Lagerung sind die zugesetzten Verbindungen ausgeschwitzt und die Wirksamkeit der Zusatzstoffe ist dadurch beträchtlich vermindert.

In dem Verfahren der DE-OS 2 606 389 verwendet man als Haftkleber Pfropfcopolymerisate aus Copolymerisaten des Äthylens mit Estern äthylenisch ungesättigter Monocarbon-

säure und äthylenisch ungesättigter Monocarbonsäure. Diese Pfropfcopolymerisate verbessern die Festigkeit der Klebeverbindung Polymerisat/Metall vor allem gegen durch die Polymerisatschutzschicht diffundierendes Wasser. Bringt man jedoch eine Verletzung in die Beschichtung die bis zur metallischen Oberfläche durchführt, so wird die Beschichtung an dieser Stelle unterwandert. Die Unterwanderungstiefe ist zwar geringer als bei den in der DE-OS 1 669 685 beschriebenen Haftklebern aus Äthylenterpolymerisaten, aber immer noch unerwünscht hoch.

Es ist auch bereits aus der DE-OS 2 523 617 bekannt, Haftverklebefolien zum Verkleben der verschiedenartigsten Werkstoffe zu verwenden, wobei die Haftklebemasse aus einer Mischung eines binären Äthylen-Acrylsäuremethylester-Copolymerisats und eines klebrigmachenden Harzes, das ein Kolophoniumharz sein kann, besteht. Der Vorzug dieser bekannten Klebemasse ist deren hohe Wärmebeständigkeit bei der Verarbeitung. Die Haftfestigkeit dieser Mischungen an Stahl läßt aber noch zu wünschen übrig.

Eine weitere Möglichkeit der Verklebung ist die Verwendung sog. Weichkleber. Diese Produkte auf Basis hochprozentiger Äthylen-Vinylacetat-Copolymerisate erzielen eine gute Haftung auf Metall durch einen hohen Anteil an natürlichen Balsamharzen, die als Hauptbestandteil Abietinsäure enthalten. Diese Weichkleber sind jedoch bei 60°C geschmolzen, d.h. sie haben nur noch sehr geringe Festigkeit, der Verbund kann ohne Kraft gelöst werden bzw. allein durch die unterschiedlichen Ausdehnungskoeffizienten von Metall zu Polyäthylen lösen sich z.B. Polyäthylenumhüllungen vom Stahlrohr, wenn dieses bei Lagerung oder im Betrieb diese Temperatur überschreitet. Außerdem ist die Abietinsäure sehr oxydationsempfindlich und deshalb nicht für den Einsatz bei erhöhter Temperatur geeignet. Die Unterwanderung von

beschichteten Stahlrohren in Wasser bzw. Salzwasser ist bei kathodischem Schutz gering.

Zum Beschichten und Verkleben verschiedener Werkstoffe sind auch bereits schon Mischungen aus Carbonsäure und Carbonsäureester enthaltenden Äthylenterpolymerisaten mit Kolophonium oder modifizierten Kolophoniummaterialien, Alkalihydroxid und einer Aminbase (vgl. DE-OS 2 354 364) bekannt. Diese Mischungen werden aber als wäßrige Dispersionen angewendet. Aufgrund der Ausbildung ionischer Vernetzungen sollen mit dieser Klebstofformulierung Materialien entwickelt werden, die einen gewissen Grad von thermischer Beständigkeit aufweisen.

Der Erfindung liegt die Aufgabe zugrunde, ein Verfahren der eingangs geschilderten Art aufzuzeigen, das nicht mit den vorerwähnten Nachteilen belastet ist. Insbesondere soll ein Verfahren zum Beschichten und Verkleben von Eisen oder Stahl mit Polyolefinen aufgefunden werden, das zu Klebeverbindungen mit guter Festigkeit bei erhöhten Temperaturen und geringen Unterwanderungstiefen durch Wasser im Falle einer Verletzung der Polyolefinbeschichtung auch bei kathodisch geschützten Systemen führt.

Diese Aufgabe wird erfindungsgemäß dadurch gelöst, daß als Haftvermittler das in der Mischung mit dem Äthylenterpolymerisat (a) verwendete modifizierte Kolophonium (b) ein Glycerin- oder Pentaerythritester des vollständig hydrierten Kolophoniumesters ist und daß die Summe aus dem Gewichtsanteil des hydrierten Kolophoniumesters und den Gewichtsanteilen der im Äthylenterpolymerisat (a) einpolymerisierten ungesättigten Carbonsäureester und Carbonsäuren zwischen 35 und 55 Gew.-%, bezogen auf die Mischung aus (a) und (b), beträgt.

Die technische Durchführung des Verfahrens zur Herstellung der Schichtstoffe aus Eisen oder Stahl und einem Polyolefin kann mit den einschlägig üblichen Methoden mit den einschlägig üblichen Vorrichtungen erfolgen, wobei zu bemerken ist, daß die Arbeitstemperatur nicht höher als 240°C sein sollte.

Vorzugsweise wird bei einer Temperatur von 120 bis 220°C gearbeitet, wobei der zwischen den Werkstoffen Metall und Polyolefin liegende Haftvermittler schmilzt. Es ist vorteilhaft, die Verklebung unter einem Preßdruck von 0,5 bis 2 bar vorzunehmen und den Preßdruck solange aufrechtzuerhalten, bis sich der Haftvermittler durch Abkühlen ausreichend verfestigt hat. Bei der Beschichtung des Substrats Eisen oder Stahl wird eine 1 bis 10 mm dicke Polyolefinschicht, das bevorzugt Polyäthylen ist und in Form von Folien oder Platten vorliegt, verwendet. Unter Polyolefin werden dabei übliche Äthylen- oder Propylenpolymerisate verstanden, die eine Dichte von 0,91 bis 0,96 g/cm$^3$ und einen Schmelzindex von ca. 0,1 bis 20 g/10 min. aufweisen. Das Substrat Eisen oder Stahl kann in beliebiger Form und Dicke z.B. als Blech, Platten oder Rohre vorliegen.

Die im Rahmen der Erfindung für die Haftvermittler zu verwendenden Terpolymerisate aus 62 bis 95 Gew.-% Äthylen, 2 bis 30 Gew.-% eines Esters einer äthylenisch ungesättigten Carbonsäure und 3 bis 8 Gew.-% einer äthylenisch ungesättigten Carbonsäure, wobei die Summe der Gewichtsteile jeweils 100 betragen muß, können z.B. nach dem Verfahren der US-PS 2 703 794 durch Copolymerisation von Äthylen mit einem Ester einer äthylenisch ungesättigten Carbonsäure und mit einer äthylenisch ungesättigten Carbonsäure bei Temperaturen zwischen 150 und 400°C und bei Drücken über 1000 Atmosphären oder nach dem Verfahren der DE-OS 2 342 486 durch Pfropfen von monoäthylenisch ungesättigter Carbonsäure auf ein Äthylen-Acrylsäurealkylester-Copolymerisat hergestellt werden. Der Schmelzindex der Terpolymerisate liegt zwischen 0,1 und 20 g/10 min. (gemessen nach ASTM D 1238-65 T bei einer Temperatur von 190°C und einem Auflagegewicht von 2,16 kp), der Erweichungsbereich zwischen 80 und 120°C. Bevorzugte Äthylenterpolymerisate sind solche, die 3 bis 8 Gew.-% Acrylsäure und 2 bis 30 Gew.-% eines $C_1$- bis $C_8$-Alkylesters der Acrylsäure, insbesondere n-Butylacrylat oder tert.-Butylacrylat einpolymerisiert enthalten. Zur Verklebung des Substrats Eisen oder Stahl mit einem Polyolefin wie Polyäthylen wird eine 50 bis 500 µm dicke Schicht des Terpolymerisats zwischen die beiden obengenannten Schichten nach einschlägig üblicher Verfahrensweise aufgebracht, z.B. indem man zwischen die zu verklebenden Flächen eine Folie oder einen Schmelzefilm des Terpolymerisats legt.

Nach erfindungsgemäßem Verfahren enthält das Terpolymerisat einen Glycerin- und/oder Pentaerythritester des vollständig hydrierten Kolophoniums eingemischt, wobei die Summe aus dem Gewichtsanteil des hydrierten Kolophoniumesters und den Gewichtsanteilen der im Äthylenterpolymerisat einpolymerisierten ungesättigten Carbonsäureester und Carbonsäuren zwischen 35 und 55 Gew.-%, bezogen auf die Mischung, beträgt.

Unter Glycerin- und/oder Pentaerythritester eines vollständig hydrierten Kolophoniums werden klebrigmachende Harze verstanden, d.h. feste, amorphe, harte bis spröde thermoplastische Substanzen, die bei Temperaturen zwischen 102 bis 110°C (Pentaerythritester) bzw. 80 bis 88°C (Glycerinester) erweichen und eine Säurezahl von 7 bis 16, vorzugsweise von maximal 10, und ein spezifisches Gewicht von ca. 1,07 g/cm$^3$ aufweisen. Die Harze sind oxydationsbeständig und weisen eine ausgezeichnete Alterungsbeständigkeit auf. Sie sind in jedem Verhältnis mit den erfindungsgemäß zu

verwenden̄den Äthylenterpolymerisaten verträglich und entmischen sich auch bei Raumtemperatur nicht. Die Glycerin- und Pentaerythritester des vollständig hydrierten Kolophoniums sind an sich bekannt und im Handel z.B. unter den Handelsnamen "PENTALYN [R]H" und "STAYBELITE[R] Ester 10" erhältlich (vgl. "Hercules Technische Daten" 733 - 7/g und 739 - 7/g der Hercules GmbH, Hamburg, Postfach 800 320). Erfindungsgemäß soll die Summe aus dem Gewichtsanteil des hydrierten Kolophonium-Pentaerythritesters oder -Glycerinesters und den Gewichtsanteilen der im Äthylenterpolymerisat einpolymerisierten ungesättigten Carbonsäureester und Carbonsäuren zwischen 35 und 55 Gew.-%, bezogen auf die Mischung aus Terpolymerisat und hydriertem Kolophoniumester sein.

Die mit der Erfindung erzielten Vorteile bestehen insbesondere darin, daß die Unterwanderung von mit Polyäthylen beschichteten Stahlteilen wie Stahlrohren in Wasser bzw. Salzwasser auch bei kathodischem Schutz gering ist. Wichtig ist diese geringe Unterwanderung vor allem bei beschichteten Pipelines. Geprüft wird diese Eigenschaft nach dem ASTM-Test G8-72 T "Standard Methods of Test for Cathodic Disbonding of pipeline coatings".

Die in der Erfindung benutzte Prüfmethode erfolgt in Anlehnung an die ASTM G8-72 T-Vorschrift. Als Prüfkörper werden jedoch Platten verwendet, als Schutzspannung das Element Eisen:Magnesium. In den folgenden Beispielen und Vergleichsbeispielen sind alle Prozentangaben Gewichtsprozente.

Prüfkörper und Prüfkriterien:

## Beispiel 1

A Disbondingtest

Als Prüfkörper werden Verbunde mit folgendem Aufbau verwendet.

1 mm dicke Polyäthylenplatte (D = 0,922 g/cm$^3$, MFI = 0,5 g/10 min)

0,5 mm dickes Eisenblech

0,3 mm Kleber, bestehend aus 65 Gew.-% eines Äthylenterpolymerisates, das 86 Gew.-% Äthylen, 10 Gew.-% Acrylsäure-t-Butylester und 4 Gew.-% Acrylsäure einpolymerisiert enthält und einen Schmelzindex MFI von 8 g/10 min aufweist sowie 35 Gew.-% eines Pentaerythritesters von hydriertem Kolophonium mit einem Erweichungspunkt von 105°C und einer Säurezahl von 9.

1 mm Polyäthylenplatte wie oben.

Dieses Paket wird in einem Rahmen in der Presse bei 180°C 3 Minuten verpreßt. Die Dicke des Rahmens ist 2,6 mm also ca. 0,2 mm dünner, als der Dickensumme der Einzelplatten entspricht. Dadurch erhält man blasenfreie Verbunde, bei denen das Eisenblech allseits von Polyäthylen umhüllt ist. Auf der Seite des Eisenblechs, die mit dem Kleber verbunden ist, wird in der Mitte ein Loch mit 6 mm Durchmesser bis zum Metall gebohrt. Ein zweites Loch mit dem Durchmesser von 2 mm wird in eine Ecke gebohrt. Von diesem zweiten Loch wird ein Kupferdraht zu einem Magnesiumstab geführt. Dieses Gebilde wird dann so in Salzlösung (je 1 Gew.-% NaCl/1 Gew.-% Na$_2$CO$_3$/1 Gew.-% Na$_2$SO$_4$ oder 3 Gew.-%ige NaCl-Lösung) gestellt, daß sich 6 mm Loch und Mg-Stab in 10 cm Abstand gegenüberstehen, das 6 mm Loch immer ganz bedeckt ist und das kleine Loch und die Verbindung Eisenblech/Kupferdraht bzw. Magnesium/Kupferdraht trocken bleiben.

Nach 30 Tagen beträgt die Unterwanderung vom Lochrand nur 13 mm.

B    Schälfestigkeit

Prüfkörper für Schälfestigkeit Ein gereinigtes und entfettetes 0,5 mm dickes Eisenblech der Dimension 16 x 16 wird an einer Seite auf einer Länge von 4 cm mit Aluminiumbronze als Trennschicht bestrichen. Auf das so präparierte Eisenblech wird dann die 0,3 mm dicke Folie des in A verwendeten Klebers mit gleicher Abmessung wie das Eisenblech gelegt, darauf eine 1 mm dicke Platte Polyäthylen(vgl. A). Das Plattenpaket wird in einer Presse unter einem Druck von 2 kp/cm$^2$ innerhalb von 3 Minuten bei einer Temperatur von 180°C miteinander verbunden.

Anschließend wird die Verbundplatte in 2,0 cm breite Streifen geschnitten. An der mit Aluminiumbronze bestrichenen Seite kann das Polyäthylen leicht vom Metall getrennt werden, d.h. eine Haftfestigkeit ist an diesen Stellen nicht meßbar. Zur Prüfung der Haftfestigkeit der Schichten biegt man zunächst die nicht miteinander verklebten Enden des Streifens um 90°C und spannt das freie Metallende des Prüfstreifens in eine Klemme einer Zerreißmaschine, das freie Ende des Polyäthylenstreifens in die andere. Die Klemmen der Zerreißmaschine werden dann mit einer Geschwindigkeit von 100 mm/min auseinandergezogen. Man ermittelt die Kraft, die notwendig ist, um den Verbund zu lösen. Bei 80°C erfolgt die Prüfung im geöffneten Wärmeschrank mit einer Federwaage.

Die Schälfestigkeit beträgt bei 23°C 83N/cm bei 80°C ca. 50N/cm.


Beispiel 2

A    Disbondingtest

Als Prüfkörper werden Verbunde mit folgendem Aufbau verwendet.

1 mm dicke Polyäthylenplatte (D = 0,922 g/cm$^3$, MFI = 0,5 g/10 min)

0,5 mm dickes Eisenblech

0,3 mm Kleber, bestehend aus 85 Gew.-% eines Äthylenterpolymerisats, das 76 Gew.-% Äthylen, 10 Gew.-% Acrylsäure-t-Butylester und 4 Gew.-% Acrylsäure einpolymerisiert enthält und einen Schmelzindex MFI von 8 g/10 min aufweist sowie 15 Gew.-% eines Glycerinesters von hydriertem Kolophonium mit einem Erweichungspunkt von 86°C und einer Säurezahl von 12.

1 mm Polyäthylenplatte wie oben.

Prüfung wie im Beispiel 1A.
Nach 30 Tagen beträgt die Unterwanderung vom Lochrand nur 12 mm.


B    Prüfkörper für Schälfestigkeit

Ein gereinigtes und entfettetes 0,5 mm dickes Eisenblech der Dimension 16 x 16 wird an einer Seite auf einer Länge von 4 cm mit Aluminiumbronze als Trennschicht bestrichen. Auf das so präparierte Eisenblech wird dann die 0,3 mm dicke Folie des in A verwendeten Klebers mit gleicher Abmessung wie das Eisenblech gelegt, darauf eine 1 mm dicke Platte Polyäthylen (vgl. A). Das Plattenpaket wird in einer Presse unter einem Druck von 2 kp/cm$^2$ innerhalb von 3 Minuten bei einer Temperatur von 180°C miteinander verbunden.

Prüfung wie im Beispiel 1B.

Die Schälfestigkeit beträgt bei 23°C 75N/cm bei 80°C
ca. 35 N/cm.

Beispiel 3

A     Disbondingtest

Als Prüfkörper werden Verbunde mit folgendem Aufbau
verwendet.

1 mm dicke Polyäthylenplatte (D = 0,922 g/cm$^3$, MFI =
0,5 g/10 min)

0,5 mm dickes Eisenblech

0,3 mm Kleber, bestehend aus 70 Gew.-% eines Äthylenterpolymerisats, das 86 Gew.-% Äthylen, 10 Gew.-%
Acrylsäure-t-Butylester und 4 Gew.-% Acrylsäure einpolymerisiert enthält und einen Schmelzindex MFI von
8 g/10 min aufweist sowie 30 Gew.-% eines Glycerinesters von hydriertem Kolophonium mit einem Erweichungspunkt von 86°C und einer Säurezahl von 12.

1 mm Polyäthylenplatte wie oben.

Prüfung wie im Beispiel 1A.

Nach 30 Tagen beträgt die Unterwanderung vom Lochrand
nur 17 mm.

B     Prüfkörper für Schälfestigkeit

Ein gereinigtes und entfettetes 0,5 mm dickes Eisenblech der Dimension 16 x 16 wird an einer Seite auf
einer Länge von 4 cm mit Aluminiumbronze als Trennschicht bestrichen. Auf das so präparierte Eisenblech wird dann die 0,3 mm dicke Folie des in A verwendeten Klebers mit gleicher Abmessung wie das Eisenblech gelegt, darauf eine 1 mm dicke Platte Polyäthylen (vgl. A). Das Plattenpaket wird in einer Presse
unter einem Druck von 2 kp/cm$^2$ innerhalb von 3 Minu- ten bei einer Temperatur von 180°C miteinander verbunden.

Prüfung wie im Beispiel 1B.

Die Schälfestigkeit beträgt bei 23°C 85N/cm bei 80°C ca. 45 N/cm.

## Vergleichsbeispiel 1

A    Disbondingtest

Als Prüfkörper werden Verbunde mit folgendem Aufbau verwendet.

1 mm dicke Polyäthylenplatte (D = 0,922 g/cm$^3$, MFI = 0,5 g/10 min)

0,5 mm dickes Eisenblech

0,3 mm Kleber, bestehend aus 100 Gew.-% eines Äthylenterpolymerisats, das 86 Gew.-% Äthylen, 10 Gew.-% Acrylsäure-t-Butylester und 4 Gew.-% Acrylsäure einpolymerisiert enthält und einen Schmelzindex MFI von 8 g/10 min aufweist

1 mm Polyäthylenplatte wie oben.

Prüfung wie im Beispiel 1A.

Nach 30 Tagen beträgt die Unterwanderung vom Lochrand bereits 30 mm.

B    Prüfkörper für Schälfestigkeit

Ein gereinigtes und entfettetes 0,5 mm dickes Eisenblech der Dimension 16 x 16 wird an einer Seite auf einer Länge von 4 cm mit Aluminiumbronze als Trennschicht bestrichen. Auf das so präparierte Eisenblech wird dann die 0,3 mm dicke Folie des in A verwendeten Klebers mit gleicher Abmessung wie das Eisenblech gelegt, darauf eine 1 mm dicke Platte Polyäthylen (vgl. A). Das Plattenpaket wird in einer Presse unter einem Druck von 2 kp/cm$^2$ innerhalb von 3 Minuten bei einer Temperatur von 180°C miteinander verbunden.

Prüfung wie im Beispiel 1B.

Die Schälfestigkeit beträgt bei 23°C 82N/cm bei 80°C ca. 40 N/cm.

Vergleichsbeispiel 2

A   Disbondingtest

Als Prüfkörper werden Verbunde mit folgendem Aufbau verwendet.

1 mm dicke Polyäthylenplatte (D = 0,922 g/cm$^3$, MFI = 0,5 g/10 min)

0,5 mm dickes Eisenblech

0,3 mm Kleber, bestehend aus 50 Gew.-% eines Äthylenterpolymerisats, das 76 Gew.-% Äthylen, 20 Gew.-% Acrylsäure-n-Butylester und 4 Gew.-% Acrylsäure einpolymerisiert enthält und einen Schmelzindex MFI von 6 g/10 min aufweist sowie 50 Gew.-% eines Pentaerythritesters von hydriertem Kolophonium mit einem Erweichungspunkt von 105°C und einer Säurezahl von 9.

1 mm Polyäthylenplatte wie oben.

Prüfung wie im Beispiel 1A.

Nach 30 Tagen beträgt die Unterwanderung vom Lochrand nur 12 mm.

B   Prüfkörper für Schälfestigkeit

Ein gereinigtes und entfettetes 0,5 mm dickes Eisenblech der Dimension 16 x 16 wird an einer Seite auf einer Länge von 4 cm mit Aluminiumbronze als Trennschicht bestrichen. Auf das so präparierte Eisenblech wird dann die 0,3 mm dicke Folie des in A ver- wendeten Klebers mit gleicher Abmessung wie das Eisenblech gelegt, darauf eine 1 mm dicke Platte Polyäthylen (vgl. A). Das Plattenpaket wird in einer Presse
unter einem Druck von 2 kp/cm$^2$ innerhalb von 3 Minuten bei einer Temperatur von 180°C miteinander verbunden.

Prüfung wie im Beispiel 1B.

Die Schälfestigkeit beträgt bei 23°C 70N/cm bei 80°C
ist die Festigkeit unbefriedigend niedrig, sie ist
kleiner 10 N/cm$^2$.

Vergleichsbeispiel 3

A    Disbondingtest

Als Prüfkörper werden Verbunde mit folgendem Aufbau
verwendet.

1 mm dicke Polyäthylenplatte (D = 0,922 g/cm$^3$, MFI =
0,5 g/10 min)

0,5 mm dickes Eisenblech

0,3 mm Kleber, bestehend aus 35 Gew.-% eines Äthylencopolymerisats, das 70 Gew.-% Äthylen, 30 Gew.-% Vinylacetat einpolymerisiert enthält und einen Schmelzindex MFI von 10 g/10 min aufweist sowie 65 Gew.-%
eines Pentaerythritesters von hydriertem Kolophonium
mit einem Erweichungspunkt von 105°C und einer Säurezahl von 9.

1 mm Polyäthylenplatte wie oben.

Prüfung wie im Beispiel 1A.

Nach 30 Tagen beträgt die Unterwanderung vom Lochrand
30 mm.

B    Prüfkörper für Schälfestigkeit

Ein gereinigtes und entfettetes 0,5 mm dickes Eisen- blech der Dimension  16 x 16 wird an einer Seite auf einer Länge von 4 cm mit Aluminiumbronze als Trennschicht bestrichen. Auf das so präparierte Eisenblech wird dann die 0,3 mm dicke Folie des in A verwendeten Klebers mit gleicher Abmessung wie das Eisenblech gelegt, darauf eine 1 mm dicke Platte Polyäthylen (vgl. A). Das Plattenpaket wird in einer Presse unter einem Druck von 2 kp/cm$^2$ innerhalb von 3 Minuten bei einer Temperatur von 180°C miteinander verbunden.

Prüfung wie im Beispiel 1B.

Die Schälfestigkeit beträgt bei 23°C 43N/cm bei 80°C ist der Kleber geschmolzen.

## Patentanspruch

Verfahren zur Herstellung von Schichtstoffen aus Eisen oder Stahl und einem Polyolefin, wobei man die Metallschicht ein- oder beidseitig mit einer 1 bis 10 mm dikken Polyolefinschicht unter Verwendung jeweils einer dazwischenliegenden, 50 bis 500 µm dicken Schicht eines Haftvermittlers, der aus einer Mischung aus (a) einem Äthylenterpolymerisat, das 62 bis 95 Gew.-% Äthylen, 2 bis 30 Gew.-% eines Esters einer äthylenisch ungesättigten Carbonsäure und 3 bis 8 Gew.-% einer äthylenisch ungesättigten Carbonsäure - wobei die Summe der Gewichtsteile jeweils 100 betragen muß - einpolymerisiert enthält und (b) einem modifiziertem Kolophonium besteht, bei erhöhter Temperatur sowie ggf. bei erhöhtem Druck unter Schmelzen des Haftvermittlers verklebt, dadurch gekennzeichnet, daß das modifizierte Kolophonium (b) ein Glycerin- oder Pentaerythritester des vollständig hydrierten Kolophoniums ist und daß die Summe aus dem Gewichtsanteil des hydrierten Kolophoniumesters (b) und den Gewichtsanteilen der im Äthylenterpolymerisat (a) einpolymerisierten ungesättigten Carbonsäureester und Carbonsäuren zwischen 35 und 55 Gew.-%, bezogen auf die Mischung aus (a) und (b), beträgt.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DD - A - 78 363 (REICHERDT)<br>+ Gesamt +<br>-- | 1 |
| | DE - A - 2 236 471 (DOW CHEMICAL)<br>+ Ansprüche; Seite 2, 2. Absatz bis Seite 4, 3. Absatz +<br>---- | 1 |

**KLASSIFIKATION DER ANMELDUNG (Int.Cl. 3)**

C 08 J 5/12

B 32 B 15/08

C 09 J 3/14//

(C 09 J 3/14,

C 08 L 23/08)

**RECHERCHIERTE SACHGEBIETE (Int. Cl. 3)**

C 08 J

B 32 B

C 09 J

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 04-06-1980 | WEIGERSTORFER |

EPA form 1503.1  06.78